# EUROPEAN PATENT APPLICATION

(11) **EP 4 819 232 A1**
(43) Date of publication of application: **07.10.2026**
(21) Application number: 24921445.3
(22) Date of filing: 18.09.2024
(51) Int. Cl.: H01M 4/36

(54) **NEGATIVE ELECTRODE MATERIAL AND PREPARATION METHOD THEREFOR, SECONDARY BATTERY AND ELECTRIC DEVICE**

(30) Priority: 02.02.2024 CN 202410154299
(71) Applicant: Contemporary Amperex Technology Co., Limited, Ningde, Fujian 352100 (CN)
(72) Inventor: YUN, Liang, Ningde, Fujian 352100 (CN); SUN, Xin, Ningde, Fujian 352100 (CN)
(74) Representative: Lorenz Seidler Gossel Part. mbB
(86) International application number: PCT/CN2024/119407
(87) International publication number: WO 2025/161420

(57) **Abstract**

A negative electrode material and a preparation method therefor, a secondary battery and an electric device. The negative electrode material comprises a porous carbon matrix and a composite material distributed in the pores of the porous carbon matrix, wherein the composite material comprises a C-Si-O bond and a Si-Si bond. By preparing the composite material containing C-Si-O bond in the pores of the porous carbon matrix, the volume expansion of Si during charging and discharging can be reduced, and the cycle life of the secondary battery is favorably prolonged.

## Description

### CROSS-REFERENCE TO RELATED APPLICATIONS

The present disclosure is filed based on, and claims priority to, Chinese Patent Application No. 202410154299, filed on February 2, 2024 and entitled "Negative Electrode Material and Preparation Method Therefor, Secondary Battery, and Electric Device", the entire content of which is hereby incorporated herein by reference.

### TECHNICAL FIELD

The present disclosure relates to the technical field of batteries, and in particular, to a negative electrode material and a preparation method therefor, a secondary battery, and an electric device.

### BACKGROUND

Batteries, as green energy systems, have been widely applied in energy storage power systems such as hydraulic, thermal, wind, and solar power plants, as well as in various fields of power tools, electric bicycles, electric motorcycles, electric vehicles, aerospace, and the like due to characteristics of high energy density, long cycle life, high safety, environmental friendliness, and the like.

As an important component of a battery, a negative electrode material is closely related to battery performance. At present, the technology of carbon-based negative electrodes has been very mature, however, the theoretical specific capacity of 372 mAh/g has not been able to meet the increasing demand of people for energy density. In this case, silicon-based negative electrode materials with higher capacity are receiving increasing attention. At present, the development direction of silicon-based negative electrode materials mainly relates to silicon-carbon composite materials. However, silicon-based negative electrode materials suffer from problems of volume expansion and poor electrical conductivity during charging and discharging processes, which result in inferior cycling performance of batteries and thus affect the service performance of secondary batteries.

### SUMMARY

The present disclosure is made in view of the above subject, and an objective thereof is to provide a negative electrode material and a preparation method therefor, a secondary battery, and an electric device. The negative electrode material, when applied to a secondary battery, allows the battery to have lower volume expansion and improved cycle life.

In order to achieve the above objective, a first aspect of the present disclosure provides a negative electrode material, including: a porous carbon matrix and a composite material distributed in pores of the porous carbon matrix, where the composite material includes a C-Si-O bond and a Si-Si bond. Since the Si-C bond has a stronger bond energy than the Si-O bond, the Si-C bond is less likely to be broken during charging and discharging, such that the Si-C bond may provide a tensile force to Si, thereby limiting the volume expansion of Si during charging and discharging. The reduction of the volume expansion of Si may improve the structural stability of the negative electrode material, thereby improving the cycle stability of the secondary battery. On this basis, the composite material is distributed in the pores of the porous carbon matrix, which may provide space for the expansion of the composite material on the one hand, and may also limit the expansion of the composite material on the other hand, and may improve the structural stability and integrity of the negative electrode material, thereby further prolonging the cycle life of the secondary battery.

In some embodiments, the composite material includes SiₓO_{y}C_{z}, where x is 0.3 to 0.4, y is 0.2 to 0.3, and z is 0.4 to 0.5.

In some embodiments, in the negative electrode material, a content of a silicon element is 30% by mass to 40% by mass, a content of an oxygen element is 10% by mass to 20% by mass, and a content of a carbon element is 40% by mass to 50% by mass, with respect to a total mass of the negative electrode material.

In some embodiments, a pore volume of the porous carbon matrix is 0.6 cm³/g to 0.98 cm³/g; and/or, a pore diameter of the porous carbon matrix is a 1 nm to 5 nm; and/or, a specific surface area of the porous carbon matrix is 1,000 m²/g to 2,000 m²/g; and/or, a volume particle size distribution Dv50 of the porous carbon matrix is 0.5 µm to 5 µm. The pore volume, the pore diameter, the specific surface area and the particle size distribution Dv50 of the porous carbon matrix within the above ranges may provide a sufficiently large buffer space for the volume expansion of the composite material SiₓO_{y}C_{z}, thereby improving the stability of the negative electrode material, and further prolonging the cycle stability of the secondary battery.

In some embodiments, in the negative electrode material, a mass proportion of the first composite material is 65% to 72%.

In some implementations, negative electrode material includes one or more of the following features:
(1) a volume particle size distribution Dv50 of the negative electrode material is 0. 5 µm to 5 µm; the volume particle size distribution Dv50 of the negative electrode material within the above range is beneficial to increasing the compaction density of the negative electrode sheet, thereby improving the volume energy density of the battery.
(2) a specific surface area of the negative electrode material is 0.8 m²/g to 9 m²/g; the specific surface area of the negative electrode material within the above range is beneficial to improving the first efficiency of the secondary battery.
(3) a compaction density of the negative electrode material under 5 Mpa is 1 g/cm³ to 1.5 g/cm³; the powder compaction density of the negative electrode material within the above range is beneficial to forming a reasonable pore structure between the particles of the negative electrode film layer, thereby improving the transport performance of active ions and electrons, thereby further improving the kinetic performance of the secondary battery.
(4) a tap density of the negative electrode material is 0.9 g/cm³ to 1.1 g/cm³. The tap density of the negative electrode material within the above range is beneficial to improving the compaction density of the negative electrode film layer, thereby improving the energy density of the secondary battery.

A second aspect of the present disclosure provides a preparation method for a negative electrode material, including the following steps:
preparing a porous carbon matrix; and sequentially and cyclically depositing silicon, oxygen and carbon on the porous carbon matrix. A composite material containing C-Si-O bonds and Si-Si bonds may be obtained by sequentially and cyclically depositing silicon, oxygen and carbon on the porous carbon matrix, and since the Si-C bonds have a stronger bond energy than the Si-O bonds, the possibility of breakage during charging and discharging is smaller, such that the Si-C bonds may provide a tensile force to Si and limit the volume expansion of Si during charging and discharging, thereby improving the structural stability of the negative electrode material, so as to further improve the cycle stability of the secondary battery.

In some embodiments, the deposition of silicon includes one or more of the following features: using a silicon-containing gas as a silicon source; using an inert gas as a first carrier gas; and performing deposition at a deposition temperature of 500°C to 750°C for 6 h to 24 h. The deposition of silicon under the above conditions is beneficial to the formation of Si-C bonds, which is beneficial to reducing the expansion of the negative electrode material and improve the cycle stability of the secondary battery.

In some embodiments, the deposition of silicon includes: performing deposition at a deposition temperature of 500°C to 650°C.

In some embodiments, the deposition of oxygen includes one or more of the following features: using an oxygen-containing gas as a gas source; using an inert gas as a second carrier gas; and performing deposition at a deposition temperature of 100°C to 400°C for 18 h to 36 h. Through the above deposition process, oxygen deposited on the surface of silicon in the pores of the porous carbon matrix may form SiO, and SiO may limit the volume expansion of silicon, thereby improving the stability of the composite material and facilitating the cycle stability of the battery.

In some embodiments, the deposition of carbon includes one or more of the following features: using a carbon-containing gas as a carbon source; using an inert gas as a third carrier gas; and performing deposition at a deposition temperature of 400°C to 500°C for 4 h to 10 h. The deposition of carbon under the above conditions helps to form C-Si bonds.

In some embodiments, the porous carbon matrix is prepared by at least one of a carbonization method, an activation method, and a template method.

A third aspect of the present disclosure provides a secondary battery, including a negative electrode sheet, where the negative electrode sheet includes a negative electrode current collector and a negative electrode film layer located on at least one surface of the negative electrode current collector; the negative electrode film layer includes the negative electrode material in the first aspect of the present disclosure or the negative electrode material prepared by the method in the second aspect of the present disclosure.

In some implementations, the negative electrode material includes lithium silicate.

The negative electrode film layer in the secondary battery of the present disclosure includes the negative electrode material provided by the present disclosure, which can effectively improve the cycle performance of the secondary battery.

A fourth aspect of the present disclosure further provides an electric device, including the secondary battery in the third aspect of the present disclosure.

The electric device in the present disclosure includes the secondary battery provided by the present disclosure, and thus has at least the same advantages as the secondary battery.

### BRIEF DESCRIPTION OF THE DRAWINGS

FIG. 1 is an X-ray photoelectron spectroscopy (XPS) spectrum of a negative electrode material according to an embodiment of the present disclosure.
FIG. 2 is an X-ray photoelectron spectroscopy (EDS) spectrum of a negative electrode material according to an embodiment of the present disclosure.
FIG. 3 is an X-ray photoelectron spectroscopy (XRD) spectrum of a negative electrode material according to an embodiment of the present disclosure.
FIG. 4 is a scanning electron microscopy (SEM) image of a negative electrode material according to an embodiment of the present disclosure.
FIG. 5 is a schematic diagram of a battery cell according to an embodiment of the present disclosure.
FIG. 6 is an exploded view of the battery cell shown in FIG. 5 according to an embodiment of the present disclosure.
FIG. 7 is a schematic diagram of a battery module according to an embodiment of the present disclosure.
FIG. 8 is a schematic diagram of a battery pack according to an embodiment of the present disclosure.
FIG. 9 is an exploded view of the battery pack shown in FIG. 8 according to an embodiment of the present disclosure.
FIG. 10 is a schematic diagram of an electric device using a secondary battery as a power supply according to an embodiment of the present disclosure.

Description of reference signs:
1, battery pack; 2, upper box body; 3, lower box body; 4, battery module; 5, battery cell; 51, case; 52, electrode assembly; 53, top cover assembly.

### DETAILED DESCRIPTION OF PREFERRED EMBODIMENTS

Embodiments specifically disclosing a negative electrode material and a preparation method therefor, a secondary battery, and an electric device in the present disclosure will be described below in detail with appropriate reference to the accompanying drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in the present disclosure is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. Furthermore, if the smallest range values 1 and 2 are listed, and if the largest range values 3, 4 and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all implementations and optional implementations of the present disclosure may be combined with each other to form new technical solutions.

Unless otherwise specified, all technical features and optional technical features of the present disclosure can be combined with each other to form new technical solutions.

Unless otherwise specified, all steps in the present disclosure may be performed sequentially or randomly, preferably sequentially. For example, a method including steps (a) and (b) represents that the method may include sequentially performed steps (a) and (b), or sequentially performed steps (b) and (a). For example, mentioning that the method may further include step (c) represents that step (c) may be added to the method in any order. For example, the method may include steps (a), (b), and (c), or steps (a), (c), and (b), or steps (c), (a), and (b), etc.

Unless otherwise specified, the terms used in the present disclosure have the meanings commonly understood by those skilled in the art.

Unless otherwise specified, the numerical values of each parameter mentioned in the present disclosure may be measured by various test methods commonly used in the art, for example, they may be measured according to test methods provided in the embodiments of the present disclosure.

Unless otherwise specified, in the present disclosure, the term "active ions" refers to ions that can be intercalated and deintercalated back and forth between a positive electrode and a negative electrode of the secondary battery, including but not limited to lithium ions.

In order to improve the volume expansion of the silicon-based negative electrode material, a silicon-carbon composite material is usually formed as the negative electrode material, and although the silicon-carbon composite material can improve the volume expansion to a certain extent, it is still insufficient. The reason is that the nano-scale silicon particles still expand relatively greatly, and the total pore volume of the carbon matrix is still not large enough to buffer such a large expansion. If the pore volume of the carbon matrix is increased indefinitely, the stability of the carbon matrix will be significantly reduced. Therefore, the existing silicon-containing negative electrode material still needs to be improved.

Based on this, the present disclosure provides a negative electrode material and a preparation method therefor, a secondary battery using the negative electrode material as the negative electrode material, and an electric device thereof. The present disclosure and preferred embodiments will be described in more detail below.

In some embodiments, the negative electrode material provided by the embodiments of the present disclosure includes: a porous carbon matrix and a composite material distributed in pores of the porous carbon matrix, where the composite material includes a C-Si-O bond and a Si-Si bond.

The present disclosure finds that: In the process of charging and discharging the composite material as the negative electrode material, the Si-C bond has a stronger bond energy than the Si-O bond, and the possibility of breakage is smaller, such that the Si-C bond may provide a tensile force to Si, and limit the volume expansion of Si in the charging and discharging process. The reduction of the volume expansion of Si may improve the structural stability of the negative electrode material, thereby improving the cycle stability of the secondary battery.

Further, the composite material is distributed in the pores of the porous carbon matrix, which may provide space for the expansion of the composite material on the one hand, and may also limit the expansion of the composite material on the other hand, and may improve the structural stability and integrity of the negative electrode material, thereby further improving the cycle performance of the secondary battery.

The C-Si-O bond and the Si-Si bond mentioned in the present disclosure may be characterized by X-ray photoelectron spectroscopy.

In some embodiments, the composite material includes SiₓO_{y}C_{z}, where x is 0.3 to 0.4, y is 0.2 to 0.3, and z is 0.4 to 0.5.

In the present disclosure, the phase of the composite material may be obtained by an XRD test. Specifically, the test may be performed using an X-ray diffractometer with reference to JIS K 0131-1996, and the test conditions are as follows: The composite material is sampled by a plate sample preparation method, where a CuK α ray is used as a radiation source, a copper target is used as an anode target, a voltage is 40 KV, a current is 40 mA, an anti-scattering slit is 1 mm, a scanning 2 θ angle range is 20° to 80°, a step length is 0.01671°, a time length of each step is 0.24s, and a scanning rate is 4°/min. A test instrument may be a Bruker D8 Discover X-ray diffraction analyzer.

In some embodiments, in the negative electrode material, a content of a silicon element is 30% by mass to 40% by mass, a content of an oxygen element is 10% by mass to 20% by mass, and a content of a carbon element is 40% by mass to 50% by mass, with respect to a total mass of the negative electrode material.

The contents of silicon element, oxygen element and carbon element in the composite material mentioned in the present disclosure may be measured by instruments and methods well known in the art. For example, the sample may be prepared by an interface polisher, and an energy spectrum may be obtained by an energy spectrometer, thereby obtaining the distribution of the silicon element, the oxygen element and the carbon element.

The contents of the Si element and the C element in the present disclosure may be tested in the following manner. Firstly, the negative electrode material is dissolved in an excessive amount of a sodium hydroxide solution, the Si element in the negative electrode material reacts with the sodium hydroxide solution to form silicate, the C and O elements in the negative electrode material are precipitated due to the inability to react with the sodium hydroxide solution, and after filtration, the content of the element Si is obtained by calculating the content of the silicate. The above precipitate is placed in a special crucible, an appropriate amount of flux is added for uniform mixing, and the sample is burned in oxygen to convert C into CO₂, which is converted into a corresponding signal by a detector after entering an absorption cell. This signal is sampled by the computer, and converted into a value proportional to the CO₂ concentration after linear correction, then the values of the entire analysis process are accumulated, after the analysis is completed, this accumulated value is divided by the weight value in the computer, then multiplied by the correction coefficient, and the blank is deducted to obtain the content of C in the negative electrode material. The content of Si and the content of C in the negative electrode material may be determined in the above manner, and the remaining content is the content of O.

In some embodiments, a volume particle size distribution Dv50 of the porous carbon matrix is 0.5 µm to 5 µm, optionally 0.5 µm to 3 µm. In the present disclosure, since the composite material is formed in the pores of the porous carbon matrix, the particle size of the porous carbon matrix is the size of the negative electrode material.

In the present disclosure, since the composite material is formed in the pores of the porous carbon matrix, the volume particle size distribution Dv50 of the composite material is less than 2 nm, optionally 1 nm to 1.5 nm, based on the volume particle size distribution Dv50 of the porous carbon matrix.

In some embodiments, a pore volume of the porous carbon matrix is 0.6 cm³/g to 0.98 cm³/g; and/or, a specific surface area of the porous carbon matrix is 1,000 m²/g to 2,000 m²/g; and/or, a volume particle size distribution Dv50 of the porous carbon matrix is 0. 5µm to 5µm; and/or, a pore diameter of the porous carbon matrix is 1 nm to 5 nm, optionally, the pore diameter of the porous carbon matrix is 1.5 nm to 3 nm.

The pore volume of the porous carbon matrix is 0.68 cm^{3/}g to 0.98 cm^{3/}g, the pore diameter thereof is 1 nm to 5 nm, the specific surface area thereof is 1,000 m²/g to 2,000 m²/g, and the volume particle size distribution Dv50 thereof is 0.5 µm to 5 µm, which may provide a large enough buffer space for the volume expansion of the composite material SiₓO_{y}C_{z}, thereby improving the stability of the negative electrode material, so as to further improve the cycle stability of the secondary battery.

In some embodiments, in the negative electrode material, a mass proportion of the first composite material is 65% to 72%.

In the present disclosure, the mass proportion of the composite material in the negative electrode material is within the above range, such that a suitable number of silicon-carbon bonds and a suitable number of silicon-oxygen bonds can be simultaneously formed, which is beneficial to improving the expansion performance of the negative electrode material.

In some implementations, negative electrode material includes one or more of the following features:

(1) a volume particle size distribution Dv50 of the negative electrode material is 0. 5 µm to 5 µm; the volume particle size distribution Dv50 of the negative electrode material within the above range is beneficial to increasing the compaction density of the negative electrode sheet, thereby improving the volume energy density of the battery.

(2) A specific surface area of the negative electrode material is 0.8 m²/g to 9 m²/g; the specific surface area of the negative electrode material within the above range is beneficial to improving the first efficiency of the secondary battery.

(3) a compaction density of the negative electrode material under 5 Mpa is 1 g/cm³ to 1.5 g/cm³; the powder compaction density of the negative electrode material within the above range is beneficial to forming a reasonable pore structure between the particles of the negative electrode film layer, thereby improving the transport performance of active ions and electrons, thereby further improving the kinetic performance of the secondary battery.

(4) a tap density of the negative electrode material is 0.9 g/cm³ to 1.1 g/cm³. The tap density of the negative electrode material within the above range is beneficial to improving the compaction density of the negative electrode film layer, thereby improving the energy density of the secondary battery.

In the present disclosure, the volume distribution particle size of the negative electrode material has a meaning well known in the art, which represents the particle size at which the cumulative volume distribution percentage of the material reaches 50%, and may be measured by instruments and methods known in the art. For example, the volume distribution particle size may be measured using a laser particle size analyzer with reference to GB/T 19077-2016. The testing instrument may be a Mastersizer Model 3000 laser particle size analyzer from Malvern Instruments Ltd., UK.

In the present disclosure, the specific surface area of the negative electrode material has a meaning well known in the art, and may be measured using an instrument or a method known in the art. For example, with reference to GB/T 19587-2017, the specific surface area is obtained by performing a test using a specific surface area analysis and test method based on nitrogen adsorption and performing calculation using a BrunauerEmmett Teller (BET) method. A testing instrument may be a Tri-Star 3020 specific surface area pore diameter analysis tester from Micromeritics, USA.

In the present disclosure, the compaction density of the negative electrode material has a meaning well known in the art, and may be measured using an instrument or a method known in the art. For example, the compaction density may be measured by an electronic pressure tester (for example, UTM7305 type electronic pressure tester may be used) with reference to GB/T 24533-2009. An exemplary test method is as follows: 1g of sample powder is weighed and added into a mold with a bottom area of 1.327 cm², pressurized to 5 MPa, held for 30 s, then depressurized and held for 10 s, and then the powder compacted density of the material at 5 MPa is recorded and calculated.

In the present disclosure, the tap density of the negative electrode material has a meaning well known in the art, and may be measured using an instrument or a method known in the art. For example, the tap density may be measured using a powder tap density tester with reference to GB/T 5162-2006. The test instrument may be Dandong Baidu BT 301, and the test parameters are as follows: vibration frequency of 250+15 times/min, amplitude of 3+0.2 mm, vibration times of 5,000 times, and a measuring cylinder of 25 mL.

In order to obtain the above negative electrode material, in another embodiment of the present disclosure, a preparation method for a negative electrode material is provided, and the preparation method for a negative electrode material includes the following steps:
preparing a porous carbon matrix; and
sequentially and cyclically depositing silicon, oxygen and carbon on the porous carbon matrix.

The negative electrode material prepared in the present disclosure includes a porous carbon matrix and a composite material distributed in pores of the porous carbon matrix, where the composite material includes a C-Si-O bond and a Si-Si bond.

Although the mechanism is not clear, it is found in the present disclosure that the composite material containing the C-Si-O bond and the Si-Si bond may be obtained by sequentially and cyclically depositing silicon, oxygen and carbon on the porous carbon matrix, and since the Si-C bond has a stronger bond energy than the Si-O bond, the possibility of breakage during charging and discharging is smaller, such that the Si-C bond may provide a tensile force to Si and limit the volume expansion of Si during charging and discharging. The reduction of the volume expansion of Si may improve the structural stability of the negative electrode material, thereby improving the cycle stability of the secondary battery.

On this basis, the composite material is distributed in the pores of the porous carbon matrix, which may provide space for the expansion of the composite material on the one hand, and may also limit the expansion of the composite material on the other hand, and may improve the structural stability and integrity of the negative electrode material, thereby further improving the cycle performance of the secondary battery.

In some embodiments, the number of cycles of depositing silicon, oxygen, and carbon is 3 to 5, but is not limited thereto.

In some embodiments, sequentially depositing silicon, oxygen, and carbon on the porous carbon matrix refers to sequentially depositing silicon, oxygen, and carbon on the porous carbon matrix by chemical deposition.

In some embodiments, the deposition of silicon includes one or more of the following features:
using a silicon-containing gas as a silicon source, where optionally, the silicon-containing gas includes at least one of monosilane, trisilane, dichlorosilane, trichlorosilane, and tetrachlorosilane; optionally, a flow rate of the silicon-containing gas is 0.5 L/min to 5 L/min;
using an inert gas as a first carrier gas, where optionally, the first carrier gas includes at least one of nitrogen, argon, helium or neon, and optionally, the flow rate of the first carrier gas is 0.5 L/min to 30 L/min; and
performing deposition at a deposition temperature of 500°C to 750°C for 6 h to 24 h.

In some embodiments, the silicon-containing gas may also be one or more of disilane, halosilane, polysilane, polymethylsilane, silole and derivatives thereof, and silicon fluorene and derivatives thereof.

In some embodiments, the silicon-containing gas and the first carrier gas are controlled and adjusted by a gas flow rate controller, respectively, and the gas flow rate controller may accurately control the flow rate of the silicon-containing gas to 0.5 L/min to 5 L/min and the flow rate of the first carrier gas to 0.5 L/min to 30 L/min. The deposition of silicon under the above conditions is beneficial to the formation of Si-C bonds, which is beneficial to reducing the expansion of the negative electrode material and improve the cycle stability of the secondary battery.

In some embodiments, the deposition of silicon is performed at a deposition temperature of 500°C to 650°C. The deposition of silicon is performed at the deposition temperature of 500°C to 650°C, which is more conducive to the formation of the Si-C bond.

In some embodiments, the deposition of oxygen includes one or more of the following features:
using an oxygen-containing gas as a gas source; optionally, the flow rate of the oxygen-containing gas is 0.5 L/min to 5 L/min;
using an inert gas as a second carrier gas, where optionally, the second carrier gas includes at least one of nitrogen, argon, helium, or neon; optionally, the flow rate of the first carrier gas is 0.1 L/min to 5 L/min; and
performing deposition at a deposition temperature of 400°C to 500°C for 18 h to 36 h.

In some embodiments, the oxygen-containing gas may be one or more of oxygen, carbon dioxide, water vapor, methanol, ethanol, n-propanol, isopropanol, butanol, acetone, and butanone, and preferably, the oxygen-containing gas is oxygen.

In some embodiments, the oxygen-containing gas and the second carrier gas are controlled and adjusted by a gas flow rate controller, respectively, and the gas flow rate controller can accurately control the flow rate of the oxygen-containing gas to 0.5 L/min to 5 L/min and the flow rate of the second carrier gas to 0.1 L/min to 5 L/min. The deposition of silicon under the above conditions may form SiO by the oxygen deposited on the surface of the silicon in the pores of the porous carbon matrix, and SiO may limit the volume expansion of silicon, thereby improving the stability of the composite material and facilitating the cycle stability of the battery.

In some embodiments, the deposition of carbon includes one or more of the following features:

using a carbon-containing gas as a carbon source, where optionally, the carbon-containing gas includes a hydrocarbon compound, further optionally, the carbon-containing gas includes at least one of methane, ethane, propane, ethylene or propylene, and optionally, a flow rate of the carbon-containing gas is 0.05 L/min to 0.1 L/min;
using an inert gas as a third carrier gas, where the third carrier gas includes at least one of nitrogen, argon, helium or neon, and optionally, a flow rate of the third carrier gas is 0.1 L/min to 5 L/min; and
performing deposition at a deposition temperature of 400°C to 500°C for 4 h to 10 h.

In some embodiments, the carbon-containing gas may also be alkyne such as acetylene or propyne, or aromatic hydrocarbon such as benzene, toluene, or xylene. The present disclosure preferably uses methane as a carbon source.

In some embodiments, the carbon-containing gas and the third carrier gas are separately controlled and regulated by a gas flow rate controller. The deposition of carbon under the above conditions helps to form C-Si bonds.

In some embodiments, the porous carbon matrix is prepared by at least one of a carbonization method, an activation method, and a template method, optionally by alkali activation, water vapor activation, or carbon dioxide activation.

In some embodiments, a carbon precursor for preparing the porous carbon matrix may be: one or more of glucose, fructose, sucrose, maltose, lactose, cyclodextrin, starch, glycogen, cellulose, hemicellulose, lignin, unsaturated polyester resin, epoxy resin, thermoplastic phenolic resin, thermosetting phenolic resin, polyoxymethylene resin, urea resin, furfural resin, furfuryl ketone resin, acrylic resin, polyamide, polyimide, and asphalt.

In some embodiments, the carbonization method refers to a process of pyrolyzing an organic substance into a carbonaceous material at a high temperature, and the formation of the porous structure may be adjusted by controlling the carbonization conditions.

In some embodiments, the template method refers to using voids of certain template substances as templates, filling carbon precursors therein, and after carbonization or activation, removing the template substances to leave porous carbon materials.

In some embodiments, the activation method refers to introducing an oxidant or an alkaline substance into the carbonized material to oxidize or remove a part of the carbonaceous substance, thereby forming a porous structure. For example, in the present disclosure, the porous carbon matrix may be formed by means of water vapor activation.

In some specific embodiments, the preparation method for the negative electrode material includes:
(1) preparing a porous carbon matrix;
   specifically: dissolving an epoxy resin in ethanol, stirring the mixture for 30 min to disperse the epoxy resin uniformly, placing the mixed solution in a reactor to react at 180°C for 10 h to obtain a powder material, and placing the obtained powder material in a muffle furnace to sinter at 900°C for 4 h under inert gas protection to obtain a composite carbon source material; introducing water vapor into a composite carbon source material, controlling a flow rate of the water vapor to 0.3 L/min, controlling a pressure of the water vapor to 10 MPa, and performing activation for 2 h to 6 h, to form a porous carbon matrix having a pore diameter of 0.8 nm to 5 nm, a pore volume of 0.6 cm³/g to 0.98 cm³/g, a carbon particle size of 0.5 µm to 3 µm, and a BET specific surface area of 1,000 m²/g to 2,000m²/g.

In some embodiments, after the water vapor is introduced, the water vapor (H₂O) reacts with a part of the C material to generate CO and H₂, and CO and H₂ escape to form pores, thereby realizing pore formation by the water vapor.

### (2) depositing silicon;

performing vapor deposition in a rotary furnace, a tube furnace, or a fluidized bed by using a silicon-containing gas as a silicon source and using any one of nitrogen or argon as a carrier gas, where the silicon-containing gas includes one or more of monosilane, trisilane, dichlorosilane, trichlorosilane, and tetrachlorosilane, and a flow rate of the silicon-containing gas is 0.5 L/min to 5 L/min; the flow rate of the carrier gas is 0.5 L/min to 30 L/min; and the vapor deposition temperature of silicon is 500 °C to 750°C, and the time is 6 h to 24 h.

### (3) depositing oxygen;

performing vapor deposition in a rotary furnace, a tube furnace, or a fluidized bed by using oxygen as a gas source and using any one of nitrogen or argon as a carrier gas, where the flow rate of oxygen is 0.5 L/min to 5 L/min; and the flow rate of the carrier gas is 0. 1/L min to 5L/min; and the vapor deposition of oxygen is performed at a temperature of 100°C to 400°C for 18 h to 36 h;

### (4) depositing carbon;

performing deposition in a rotary furnace or a tube furnace by using ethylene or propylene as a carbon-containing gas and using any one of nitrogen or argon as a carrier gas, where the flow rate of the carbon-containing gas is 0.05 L/min to 0.1 L/min; and the flow rate of the carrier gas is 0.1 L/min to 5 L/min; and the vapor deposition of carbon is performed at a temperature of 400°C to 500 °C for 4 h to 10 h; and

### (5) repeating the above steps (2), (3) and (4) 3 to 5 times.

The negative electrode material prepared in the present disclosure forms the C-Si-O bond, and the presence of the C-Si bond may provide the tensile force to Si to reduce the volume expansion of silicon, such that the formed negative electrode material has a relatively stable structure and a long cycle life. In addition, the lithium silicate formed around the composite material SiₓO_{y}C_{z} during the first lithium intercalation process may buffer the expansion on the one hand, and may improve the solid phase mass transfer of the material as an inorganic ion conductor on the other hand, thereby improving the cycling stability of the battery.

In addition, the secondary battery and the electric device in the present disclosure are described appropriately below with reference to the accompanying drawings.

In an implementation of the present disclosure, a secondary battery is provided.

The term "secondary battery" as referred to herein refers to a battery cell, a battery module, or a battery pack. Each of these is described below.

Generally, the battery cell includes a positive electrode sheet, a negative electrode sheet, an electrolyte, and a separator. During charge and discharge of the battery, active ions are intercalated and deintercalated back and forth between the positive electrode sheet and the negative electrode sheet. The electrolyte functions to conduct ions between the positive electrode sheet and the negative electrode sheet. The separator is disposed between the positive electrode sheet and the negative electrode sheet, to mainly prevent positive and negative electrodes from being short-circuited and allow ions to pass through.

### Positive electrode sheet

The positive electrode sheet includes a positive electrode current collector and a positive electrode film layer disposed on at least one surface of the positive electrode current collector, the positive electrode film layer including a positive electrode active material.

As an example, the positive electrode current collector has two surfaces opposed in its own thickness direction, and the positive electrode film layer is provided on either one or both of the two opposed surfaces of the positive electrode current collector.

In some implementations, the positive electrode current collector may use a metal foil or a composite current collector. For example, an aluminum foil can be used as the metal foil. The composite current collector may include a polymer material base layer and a metal layer formed on at least one surface of the polymer material base layer. The composite current collector may be formed by forming a metal material (aluminum, an aluminum alloy, nickel, a nickel alloy, titanium, a titanium alloy, silver, a silver alloy, and the like) on a base material of a polymer material such as a base material of polypropylene (PP), polyethylene terephthalate (PET), polybutylene terephthalate (PBT), polystyrene (PS), polyethylene (PE), and the like.

In some embodiments, when the battery cell is a lithium-ion battery, the positive electrode active material may be the positive electrode active materials well-known in the art for lithium-ion batteries. As an example, the positive active material may comprise at least one of the following materials: a lithium-containing phosphate with an olivine structure, a lithium transition metal oxide, and respective modified compounds thereof. However, the present disclosure is not limited to these materials, and another conventional material that can be used as a positive electrode active material of a battery may also be used. These positive active materials may be used alone or in combination of two or more thereof. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂ or LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also simply referred to as NCM₃₃₃), LiNi_{0.5}Co_{0.2}Mn_{0.3}O₂ (also simply referred to as NCM₅₂₃), LiNi_{0.5}Co_{0.25}Mn_{0.25}O₂ (also simply referred to as NCM₂₁₁), LiNi_{0.6}Co_{0.2}Mn_{0.2}O₂ (also simply referred to as NCM₆₂₂), LiNi_{0.8}Co_{0.1}Mn_{0.1}O₂ (also simply referred to as NCM₈₁₁)), lithium nickel cobalt aluminum oxide (e.g., LiNi_{0.85}Co_{0.1}Al_{0.05}O₂), modifying compounds thereof, and the like. Examples of the olivine-structured lithium-containing phosphate may include, but are not limited to, at least one of lithium iron phosphate (e.g., LiFePO₄ (which may also be simply referred to as LFP)), a composite of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon.

In some embodiments, when the battery cell is a sodium-ion battery, the positive electrode active material may be the positive electrode active material well-known in the art for sodium-ion batteries. As an example, the positive electrode active material may include a sodium transition metal oxide, a polyanionic compound, a Prussian blue compounds, and the like.

As an optional technical solution of the present disclosure, in the sodium transition metal oxide, a transition metal may be one or more of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0<x≤1.

As an optional technical solution of the present disclosure, the polyanionic compound may be a compound having a sodium ion, a transition metal ion, and a tetrahedral (YO₄)ⁿ⁻ anion unit. The transition metal may include at least one of Mn, Fe, Ni, Co, Cr, Cu, Ti, Zn, V, Zr, and Ce; Y may be at least one of P, S, and Si; n represents the valence of (YO₄)ⁿ⁻.

The polyanionic compound may alternatively be a compound having a sodium ion, a transition metal ion, a tetrahedral (YO₄)ⁿ⁻ anion unit, and a halogen anion. The transition metal may include at least one of Mn, Fe, Ni, Co, Cr, Cu, Ti, Zn, V, Zr, and Ce; Y may be at least one of P, S, and Si, and n represents the valence of (YO₄)ⁿ⁻; and the halogen may be at least one of F, Cl, and Br.

The polyanionic compound may alternatively be a compound having a sodium ion, a tetrahedral (YO₄)ⁿ⁻ anion unit, a polyhedral unit (ZO_{y})^{m+}, and an optional halogen anion. Y may be at least one of P, S, and Si, and n represents the valence of (YO₄)ⁿ⁻: Z represents the transition metal and may be at least one of Mn, Fe, Ni, Co, Cr, Cu, Ti, Zn, V, Zr, and Ce, and m represents the valance of (ZO_{y})^{m+}; and the halogen may be at least one of F, Cl, and Br.

The polyanionic compound is, for example, one or more of NaFePO₄, Na₃V₂(PO₄)₃, NaM'PO₄F(M' is one or more of V, Fe, Mn, and Ni), and a₃(VO_{y})₂(PO₄)₂F_{3-2y}(0≤y≤1).

The Prussian blue compound may be a compound having a sodium ion, a transition metal ion, and a cyanide ion (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0<a≤2, 0<b<1, and 0<c<1.

In some embodiments, deintercalation and consumption of Li occur during charging and discharging of the battery, and the molar content of Li varies when the battery is discharged to different states. In the enumeration of the positive electrode active material in the present disclosure, the molar content of Li is an initial state of the material, that is, a state before adding. The positive electrode active material is applied to a battery system, and the molar content of Li changes after charging and discharging cycles.

In the enumeration of the positive electrode active material in the present disclosure, the molar content of O is only a theoretical state value, the molar content of oxygen changes due to the release of oxygen from a lattice, and the actual molar content of O fluctuates.

In some embodiments, the positive electrode film layer optionally further includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer further optionally includes a conductive agent. As an example, the conductive agent may include at least one of superconducting carbon, acetylene black, carbon black, ketjen black, carbon dots, carbon nanotubes, graphene, and carbon nanofibers.

In some embodiments, the electrode sheet may be prepared by the following method: The components for preparing the positive electrode material, such as the positive electrode active material, the conductive agent, the binder, and any other components, are dispersed in a solvent (such as N-methylpyrrolidone) to form a positive electrode slurry; and the positive electrode slurry is coated on the positive current collector, and after processes such as drying and cold-pressing, the positive electrode plate may be obtained.

### Negative electrode sheet

The negative electrode sheet includes a negative electrode current collector and a negative electrode film layer disposed on at least one surface of the negative electrode current collector, the negative electrode film layer including the negative electrode material in the above embodiments or the negative electrode material prepared in the above embodiments.

As an example, the negative electrode current collector has two surfaces opposite in its own thickness direction, and the negative electrode film layer is disposed on either one or both of the two opposite surfaces of the negative electrode current collector.

In some implementations, the negative electrode current collector may employ a metal foil or composite current collector. For example, a copper foil may be used as the metal foil. The composite current collector may include a polymer material base layer and a metal layer formed on at least one surface of a polymer material substrate. The composite current collector may be formed by forming a metal material (copper, a copper alloy, nickel, a nickel alloy, titanium, a titanium alloy, silver, a silver alloy, or the like) on the polymer material substrate (e.g., a substrate of polypropylene (PP), polyethylene terephthalate (PET), polybutylene terephthalate (PBT), polystyrene (PS), or polyethylene (PE)).

In some embodiments, when the battery cell is a lithium-ion battery, the negative electrode active material may be the negative electrode material in the above embodiments.

In some embodiments, the negative electrode material further includes lithium silicate, and during the charging and discharging process, the lithium silicate is formed around the negative electrode material, which may buffer expansion on one hand, and may serve as an inorganic ion conductor to improve the solid phase mass transfer of the material on the other hand, thereby improving the cycle stability of the secondary battery.

In some embodiments, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode film layer further optionally includes another auxiliary agent, for example, a thickening agent (e.g., sodium carboxymethyl cellulose (CMC-Na)).

In some embodiments, the negative electrode sheet may be prepared by the following method: The components for preparing the negative electrode sheet, such as the negative electrode active material, the conductive agent, the binder, and any other components are dispersed in a solvent (such as deionized water) to form a negative electrode slurry; and the negative electrode slurry is coated on the negative electrode current collector, and after processes such as drying and cold pressing, the negative electrode sheet may be obtained.

### Electrolyte

The electrolyte functions to conduct ions between the positive electrode sheet and the negative electrode sheet. The type of the electrolyte is not particularly limited in the present disclosure, and may be selected according to a requirement. For example, the electrolyte may be liquid, gelled or all solid.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bisfluorosulfonylimide, lithium bistrifluoromethanesulfonylimide, lithium trifluoromethanesulfonate, lithium difluorophosphate, lithium difluorooxalatoborate, lithium dioxalatoborate, lithium difluorodioxalatophosphate, and lithium tetrafluorooxalatophosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some implementations, the electrolyte solution optionally further includes an additive. For example, the additive may include a negative electrode film-forming additive or a positive electrode film-forming additive, and may further include an additive capable of improving specific performance of a battery, for example, an additive for improving overcharge performance of a battery, or an additive for improving high-temperature or low-temperature performance of a battery.

### Separator

In some implementations, the battery cell further includes a separator. The type of the separator is not particularly limited in the present disclosure, and any well-known porous separator with good chemical stability and mechanical stability may be used.

In some embodiments, a material of the separator may be selected from at least one of glass fibers, nonwoven fabrics, polyethylene, polypropylene, and polyvinylidene fluoride. The separator may be a single-layer thin film or may be a multi-layer composite thin film, which is not particularly limited. When the separator is a multi-layer composite thin film, materials of each layer may be the same or different, which is not particularly limited.

In some embodiments, the positive electrode sheet, the negative electrode sheet, and the separator may be manufactured into the electrode assembly through a winding process or a lamination process.

In some embodiments, the battery cell may include an outer package. The outer package may be used to package the foregoing electrode assembly and electrolyte.

In some embodiments, the outer package of the battery cell may be a hard casing, for example, a hard plastic casing, an aluminum casing, or a steel casing. The outer package of the battery cell may also be a pouch, such as a bag-type pouch. The material of the pouch may be plastic, and examples of the plastic include polypropylene, polybutylene terephthalate, and polybutylene succinate.

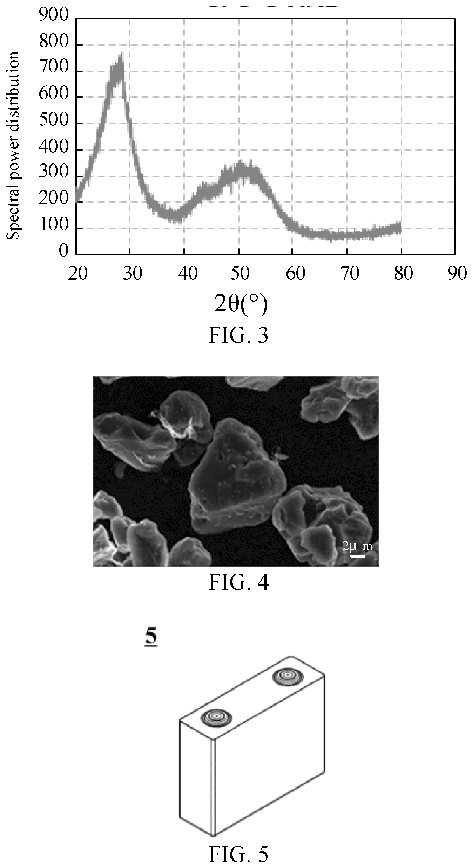

The shape of the battery cell is not particularly limited in the present disclosure, and may be a cylindrical shape, a square shape, or any other shape. For example, FIG. 5 shows a battery cell 5 with a square structure as an example.

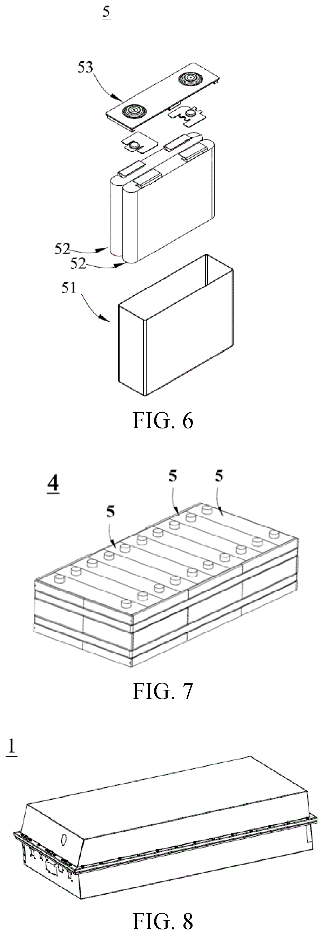

In some embodiments, referring to FIG. 6, the outer package may include a housing 51 and a top cover assembly 53. The housing 51 may include a bottom plate and side plates connected to the bottom plate, and the bottom plate and the side plates define an accommodating chamber. The housing 51 has an opening communicating with the accommodating chamber, and the top cover assembly 53 can cover on the opening to close the accommodating chamber. The positive electrode sheet, the negative electrode sheet, and the separator may be formed into an electrode assembly 52 through a winding process or a lamination process. The electrode assembly 52 is packaged in the accommodating chamber. The electrolyte solution is impregnated into the electrode assembly 52. There may be one or a plurality of electrode assemblies 52 included in the battery cell 5, and those skilled in the art may perform selection according to specific actual requirements.

In some embodiments, the battery cell may be assembled into a battery module, there may be one or a plurality of battery cells included in the battery module, and those skilled in the art may make a selection based on the application and capacity of the battery module.

FIG. 7 shows a battery module 4 as an example. Referring to FIG. 7, in the battery module 4, a plurality of battery cells 5 may be arranged sequentially in a length direction of the battery module 4. Certainly, the battery cells may alternatively be arranged in any other manner. Further, the plurality of battery cells 5 may be fastened by using fasteners.

Optionally, the battery module 4 may further include a casing having an accommodating space in which the plurality of battery cells 5 are accommodated.

In some implementations, the battery modules may be further assembled into a battery pack, and there may be one or a plurality of battery modules included in the battery pack, and the specific number may be selected by those skilled in the art according to the application and capacity of the battery pack.

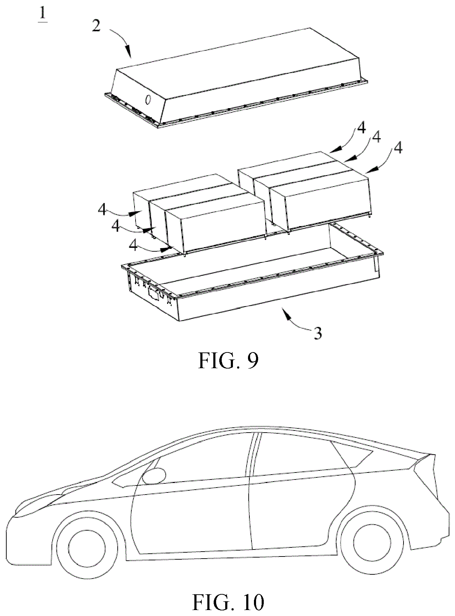

FIG. 8 and FIG. 9 show a battery pack 1 as an example. Referring to FIG. 8 and FIG. 9, a battery case and a plurality of battery modules 4 disposed in the battery case may be included in the battery pack 1. The battery case includes an upper case 2 and a lower case 3, the upper case 2 being capable of covering the lower case 3 and forming a closed space for accommodating the battery modules 4. The plurality of battery modules 4 may be arranged in any manner in the battery case.

In addition, the present disclosure further provides an electric device, including the secondary battery provided in the present disclosure. The secondary battery may be used as a power supply for the electric device, or as an energy storage unit for the electric device. The electric device may include, but is not limited to, a mobile device (e.g., a cell phone or a notebook computer), an electric vehicle (e.g., a battery electric vehicle, a hybrid electric vehicle, a plug-in hybrid electric vehicle, an electric bicycle, an electric scooter, an electric golf cart, or an electric truck), an electric train, ship, or satellite, or an energy storage system.

As an electric device, the secondary battery, the battery module, or the battery pack may be selected according to the use need.

FIG. 10 shows an electric device as an example. The electric device is a pure electric vehicle, a hybrid electric vehicle, a plug-in hybrid electric vehicle, or the like. In order to meet the demand for high power and high energy density of the secondary battery by the electric device, a battery pack or a battery module may be used.

In another example, the electric device may be a cell phone, a tablet computer, a notebook computer, or the like. The device is generally required to be thin and lightweight, and may use a battery cell as a power supply.

### Examples

Examples of the present disclosure are described below. The examples described below are illustrative, and are only used to explain the present disclosure, rather than being construed as limiting the present disclosure. In the examples, specific techniques or conditions are not indicated, and they are performed according to techniques or conditions described in documents in the art or according to the specification of the product. The reagents or instruments used without specifying the manufacturer(s) are conventional products that are commercially available.

### Example 1

### A preparation method for a negative electrode material:

1) 10g of phenolic resin was dissolved in an appropriate amount of ethanol and stirred for 30 min to disperse uniformly, the mixed solution was placed in a reaction kettle and reacted at 180°C for 10 h to obtain a powder material, and the obtained powder material was placed in a muffle furnace and sintered at 900°C for 4 h under inert gas protection to obtain a composite carbon source material; water vapor was introduced into the composite carbon source material, a flow rate of the water vapor was controlled to 0.3 L/min, a pressure of the water vapor was controlled to 10 Mpa, and an activation time was controlled to 4 h, to form a porous carbon matrix having a pore diameter of 2 nm, a pore volume of 0.6 cm³/g, a particle size distribution Dv50 of 4 µm, and a BET of 1,500 m²/g;
2) deposition was performed in a tube furnace at a temperature of 500°C for 6 h by using monosilane as a silicon source, and argon as a carrier gas, where the flow rate of the monosilane gas was 3 L/min; and the flow rate of argon was 10 L/min;
3) deposition was performed in a tube furnace at a temperature of 200°C for 18 h by using oxygen as a gas source, and nitrogen as a carrier gas, where the flow rate of oxygen was 2 L/min; and the flow rate of nitrogen was 4 L/min;
4) deposition was performed in a tube furnace at a temperature of 450°C for 8 h by using ethylene as a carbon source and argon as a carrier gas, where the flow rate of ethylene was 4 L/min; and the flow rate of the protective gas argon was 4 L/min; and
5) the above silicon deposition, oxygen deposition and carbon deposition processes were repeated three times.

### Performance characterization of the negative electrode material

### 1. chemical bond characterization

An XPS test was performed by using an Axis Supra X-ray photoelectron spectrometer, and the test conditions were as follows: The energy range was set to 5 eV to 3,000 eV, and the energy step size was set to 3 eV. A test method is as follows: 2 mg of the negative electrode material powder was pasted on an XPS test sample stage with a common double-sided adhesive (non-double-sided carbon conductive adhesive).

### 2. element distribution characterization

The cross section of the negative electrode material particles was prepared by using an IB-09010 cp type cross section polisher of JEOL Corporation, and the element distribution diagram of the anode material was tested by using an X-Max type energy dispersive spectrometer (EDS) of Ushizu Instrument Group, UK, the test method was as follows: The sample preparation glue and the negative electrode material powder were mixed uniformly (the weight of the powder was about 5 times that of the glue) and then coated to a 6 µm copper foil, dried at 60°C for 30 min to obtain a sample to be tested, the sample to be tested was cut into a size of 6 mm*6 mm with scissors and attached to a CP sample stage, the sample to be tested protruded from the sample stage within 1 mm, and the sample to be tested was cut at a voltage of 7.5 kV. The EDS test conditions were: Mode: In-lens, voltage: 20 KV, aperture stop: 60 µ m, working distance: 8.5 mm, 3 positions were selected to perform point scanning.

### 3. phase characterization

A test was performed by using a Bruker D8 Discover X-ray diffractometer with reference to JIS K 0131-1996, and the test conditions were as follows: The negative electrode material was prepared by a plate preparation method, where a CuK α ray was used as a radiation source, a copper target was used as a positive electrode target, a voltage was 40 KV, a current was 40 mA, an anti-scattering slit was 1 mm, a scanning 20 angle range was 20° to 80°, a step length was 0.01671°, a time length of each step was 0.24 s, and a scanning rate was 4°/min.

### 4. morphological characterization

A morphology test was performed by using a PhilipsXL-30 field emission scanning electron microscope (SEM), and the SEM test conditions were as follows: Mode: In-lens, voltage: 10 KV, aperture stop: 30 µ m, working distance: 4.5 mm.

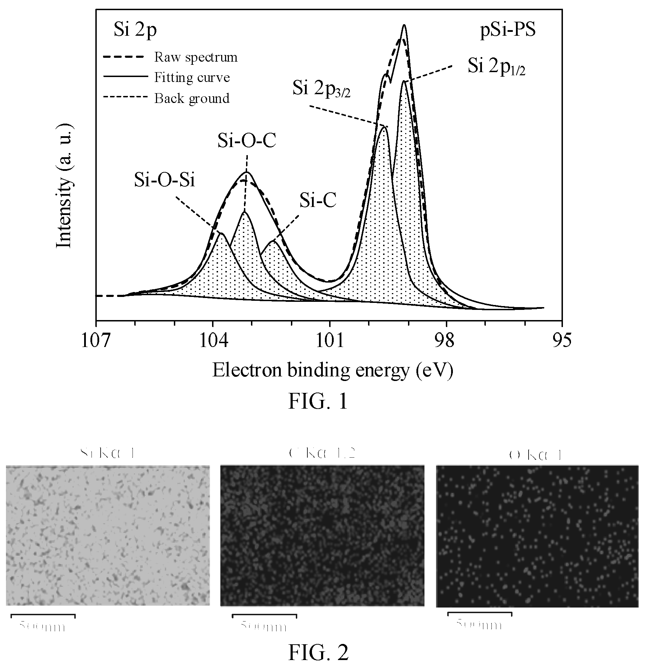

The XPS spectrum of the negative electrode material prepared in this example is shown in FIG. 1, and it can be seen from FIG. 1 that the negative electrode material includes Si-O bonds and Si-C bonds.

The EDS spectrum of the negative electrode material prepared in this example is shown in FIG. 2, and it can be seen from FIG. 2 that the negative electrode material includes three elements of Si, O and C, where in the EDS spectrum of the Si element, a bright spot represents the Si element, in the EDS spectrum of the C element, a bright spot represents the C element, and in the EDS spectrum of the O element, a bright spot represents the O element, and it can be seen that the three elements of Si, O and C are uniformly distributed throughout the negative electrode material.

The XRD spectrum of the negative electrode material prepared in this example is shown in FIG. 3, and it can be seen from FIG. 3 that the negative electrode material is amorphous, and the XRD spectrum thereof includes an amorphous carbon peak (located at 20° to 30°) and an amorphous C-Si-O peak (located at about 40° to 60°).

The SEM of the negative electrode material prepared in this example is shown in FIG. 4, and it can be seen from FIG. 4 that the negative electrode material is in an irregular shape.

### Preparation of lithium-ion battery

Manufacturing of a negative electrode sheet: The negative electrode materials prepared in Example 1 to Example 8, Comparative Example 1 and Comparative Example 2, a conductive agent carbon black, a carbon nanotube (CNT), a binder styrene-butadiene rubber (SBR) and a thickener sodium carboxymethyl cellulose (CMC) were added to deionized water at a weight ratio of 94.5:1:0.375:2.8:1.325, and mixed and stirred for 1 h to obtain an active material slurry; and the negative electrode slurry was uniformly coated onto a negative electrode current collector, dried, and cold pressed to obtain the negative electrode sheet.

Preparation of a positive electrode sheet: A lithium nickel cobalt manganese oxide (LiNi_{o.94}Co_{0.03}Mn_{0.03}O₂), a conductive agent carbon black, and a binder polyvinylidene fluoride (PVDF) were dissolved in a solvent N-methylpyrrolidone at a mass ratio of 97: 1: 2, and were mixed and stirred to obtain a positive electrode slurry; and then, the positive electrode slurry was uniformly coated onto a positive electrode current collector, dried, and cold pressed, and cut to obtain the positive electrode sheet.

Separator: A double-sided coating separator is used as the separator, where a base film is a polypropylene film, and a coating is 1 micron alumina+1 micron polyvinylidene fluoride.

Electrolyte solution: Ethylene carbonate (EC), diethyl carbonate (DEC), dimethyl carbonate (DMC) and ethyl methyl carbonate (FEC) were mixed at a volume ratio of 1:1:1:1 to obtain an organic solvent, and then lithium hexafluorophosphate (LiPF₆) and lithium bis(fluorosulfonyl)imide (LiN(SO₂F)₂) at a mass ratio of 4:6 were dissolved in the organic solvent to prepare an electrolyte solution with a concentration of 1 mol/L.

The positive electrode sheet, the separator, and the negative electrode sheet were wound in sequence to obtain a bare cell; and the bare cell was placed in a packaging shell, dried and then injected with an electrolyte, and subjected to procedures such as vacuum sealing, standing, formation, and shaping to obtain a lithium-ion battery.

### Method for testing the lithium-ion battery

### 1. Rebound of the negative electrode sheet

1) an initial thickness T1 of the negative electrode sheet was measured;
2) the battery cell was charged to 4.25 V at 0.33C₀ at 25°C, and charged at a constant voltage of 4.25 V until the current was 0.05C₀;
3) the lithium-ion battery was disassembled, and a thickness T2 of the negative electrode sheet was tested; and
4) the rebound of the negative electrode sheet was (T2-T1)/T2.

### 2. Cycle life

First, voltage calibration was performed according to the following steps:
1) The cell was allowed to stand at 25°C for 2 h, ensuring that the cell temperature was 25°C.
2) the battery cell was charged to 4.25 V at 0.33C₀ at 25°C, and charged at a constant voltage of 4.25 V until the current was 0.05C₀;
3) the battery cell was allowed to stand for 1 h;
4) the battery cells was discharged by 0.95C₀ at 0.33C₀ at 25°C, and the voltage V₁ at this time was recorded;
5) the battery cell was allowed to stand for 5 min;
6) the battery cell was discharged to 2.0 V at 0.33C₀ at 25°C;
7) the battery cell was allowed to stand for 5 min;
8) the battery cell was charged by 0.97C₀ at 0.33C₀ at 25°C, and the voltage V₂ at this time was recorded; and
9) the battery cell was allowed to stand for 2 h;

Next, a cycle test was performed according to the following steps:
1) the cell was allowed to stand at 25°C for 2 h, ensuring that the cell temperature was 25°C.
2) the battery cell was charged to a voltage V₂ at 0.33C₀ at 25°C;
3) the battery cell was allowed to stand for 0.5 h;
4) the battery cell was discharged to a voltage V₁ at 0.33C₀ at 25°C, and the capacity at this time was recorded as Cn;
5) the battery cell was allowed to stand for 0.5 h; and
6) steps 2) to 5) were repeated until the number of cycles n was 3,000.

The number of cycles corresponding to a capacity retention rate of 80% was used as a test result.

**Examples 2-9:** The rest is the same as in the steps in Example 1 except that the parameters are adjusted according to Table 1.

**Comparative example 1:** The rest is the same as Example 1 except that carbon is not deposited in the process of forming the composite material (i.e., step 4 is not performed).

**Comparative example 2:** A porous carbon matrix was prepared in the same manner as in Example 1, and then SiO was directly deposited in the pores of the porous carbon matrix at 1300°C for 6 h using silicon and silicon dioxide sources as silicon sources and nitrogen as a carrier gas.

The parameters of the negative electrode materials prepared in Examples 1-9 and Comparative Examples 1-2 and the performance test results of the secondary batteries are shown in Table 1 below.

**Table 1:**

| No. | Porous carbon matrix | | | Composite material | Negative electrode material | | Performance of secondary battery | |
|---|---|---|---|---|---|---|---|---|
| | Pore volume (cm³/g) | Pore diameter (nm) | Dv50 (µm) | | Dv50 (µm) | Specific surface area (m²/g) | Rebound of the electrode sheet in a fully charged state (%) | Cycle life with an 80% retention rate |
| Example 1 | 0.6 | 2 | 4 | Silicon, Oxygen, Carbon Sequential Deposition | 4 | 1.21 | 45 | 1962 |
| Example 2 | 0.8 | 2 | 4 | Silicon, Oxygen, Carbon Sequential Deposition | 4 | 2.38 | 40 | 2002 |
| Example 3 | 0.98 | 2 | 4 | Silicon, Oxygen, Carbon Sequential Deposition | 4 | 4.68 | 50 | 1581 |
| Example 4 | 0.8 | 1.5 | 4 | Silicon, Oxygen, Carbon Sequential Deposition | 4 | 1.22 | 50 | 1662 |
| Example 5 | 0.8 | 5 | 4 | Silicon, Oxygen, Carbon Sequential Deposition | 4 | 1.26 | 52 | 1081 |
| Example 6 | 0.8 | 2 | 0.5 | Silicon, Oxygen, Carbon Sequential Deposition | 0.5 | 6.23 | 48 | 992 |
| Example 7 | 0.8 | 2 | 3 | Silicon, Oxygen, Carbon Sequential Deposition | 3 | 3.21 | 43 | 1688 |
| Example 8 | 0.8 | 2 | 5 | Silicon, Oxygen, Carbon Sequential Deposition | 5 | 3.09 | 46 | 1470 |
| Example 9 | 0.8 | 0.8 | 4 | Silicon, Oxygen, Carbon Sequential Deposition | 4 | 1.21 | 70 | 1361 |
| Comparative Example 1 | 0.8 | 0.8 | 4 | Carbon-free deposition | 4 | 1.22 | 56 | 769 |
| Comparative Example 2 | 0.8 | 0.8 | 4 | Direct deposition SiO | 4 | 1.23 | 60 | 468 |

It can be seen from the results in Table 1 that, compared with Comparative Example 1 (no carbon deposition process) and Comparative Example 2 (direct deposition of SiO), the negative electrode materials in Examples 1-8 form a composite material containing C-Si-O bonds by sequentially depositing silicon, oxygen and carbon on the porous carbon matrix, which reduces the rebound rate of the full charge electrode sheet of the negative electrode sheet and improves the cycle life of the secondary battery. For Example 9, it is speculated that due to the small pore diameter of the porous carbon matrix, the composite material is difficult to be deposited in the pores, resulting in a high full charge rebound rate of the negative electrode sheet. For Example 5, it is speculated that due to the large pore diameter of the porous carbon matrix, the particle size of the composite material formed in the pores is large, and the composite material with a large particle size tends to exist in a crystalline form, so that there will be a change in the crystal phase during the cycle process, thereby affecting the cycle performance.

**Examples 10-12:** The rest is the same as in Example 1 except that the parameters are adjusted according to Table 2.

The parameters of the negative electrode materials prepared in Examples 10-12 and the performance test results of the secondary batteries are shown in Table 2 below.

**Table 2:**

| No. | Composite material | | Negative electrode material | | | Performance of secondary battery | |
|---|---|---|---|---|---|---|---|
| | Silicon deposition Temperature (°C) | Silicon deposition Time (h) | Dv50 (µm) | Specific surface area (m²/g) | Presence or absence of C-Si-O bond | Rebound of the electrode sheet in a fully charged state (%) | Cycle life with an 80% retention rate |
| Example 1 | 500 | 6 | 4 | 1.21 | Yes | 40% | 2002 |
| Example 10 | 650 | 6 | 4 | 1.06 | Yes | 52% | 1608 |
| Example 11 | 750 | 6 | 4 | 1.04 | Yes | 65% | 1121 |
| Example 12 | 900 | 6 | 4 | 0.85 | Yes | 88% | 620 |

It can be seen from the results in Table 2 that, by setting the temperature in the silicon deposition process to 500°C to 750°C, a negative electrode material containing C-Si-O bonds can be formed, thereby reducing the full charge rebound rate of the negative electrode sheet and improving the cycle life of the secondary battery. When the silicon deposition temperature is 900°C, although C-Si-O bonds are also formed, due to the higher deposition temperature, the formed composite material is easy to crystallize and has a larger grain size, and is more prone to cracking and pulverization during the cycle process, which affects the stability of the SEI film, thereby causing its rebound to be larger and the cycle performance to be worse.

It should be noted that the present disclosure is not limited to the aforementioned implementations. The aforementioned implementations are merely examples, and any implementation having substantially the same configuration as the technical concept and exhibiting the same operation and effect within the scope of the claims of the present disclosure is included in the technical scope of the present disclosure. In addition, various modifications that can be conceived by those skilled in the art may be made to the implementations without departing from the subject matter of the present disclosure, and other implementations constructed by combining some of the constituent elements in the implementations are also included in the scope of the present disclosure.

## Claims

1. A negative electrode material, comprising: a porous carbon matrix and a composite material distributed in pores of the porous carbon matrix,
wherein the composite material comprises a C-Si-O bond and a Si-Si bond.

2. The negative electrode material according to claim 1, wherein the composite material comprises SiₓO_{y}C_{z}, wherein x is 0.3 to 0.4, y is 0.2 to 0.3, and z is 0.4 to 0.5.

3. The negative electrode material according to claim 1 or 2, wherein, in the negative electrode material, a content of a silicon element is 30% by mass to 40% by mass, a content of an oxygen element is 10% by mass to 20% by mass, and a content of a carbon element is 40% by mass to 50% by mass, with respect to a total mass of the negative electrode material.

4. The negative electrode material according to any one of claims 1 to 3, wherein
a pore volume of the porous carbon matrix is 0.6 cm³/g to 0.98 cm³/g; and/or
a pore diameter of the porous carbon matrix is a 1 nm to 5 nm; and/or
a specific surface area of the porous carbon matrix is 1,000 m²/g to 2,000 m²/g; and/or
a volume particle size distribution Dv50 of the porous carbon matrix is 0.5 µm to 5 µm.

5. The negative electrode material according to any one of claims 1 to 4, wherein, in the negative electrode material, a mass proportion of the first composite material is 65% to 72%.

6. The negative electrode material according to any one of claims 1 to 5, comprising one or more of the following features:
(1) a volume particle size distribution Dv50 of the negative electrode material being 0.5 µm to 5 µm;
(2) a specific surface area of the negative electrode material being 0.8 m²/g to 9 m²/g;
(3) a compaction density of the negative electrode material under 5 MPa being 1 g/cm³ to 1.5 g/cm³; and
(4) a tap density of the negative electrode material being 0.9 g/cm³ to 1.1 g/cm³.

7. A preparation method for a negative electrode material, comprising:
preparing a porous carbon matrix; and
sequentially and cyclically depositing silicon, oxygen and carbon on the porous carbon matrix.

8. The preparation method according to claim 7, wherein the deposition of silicon comprises one or more of the following features:
using a silicon-containing gas as a silicon source;
using an inert gas as a first carrier gas; and
performing deposition at a deposition temperature of 500°C to 750°C for 6 h to 24 h.

9. The preparation method according to claim 8, wherein the deposition of silicon comprises:
performing deposition at a deposition temperature of 500°C to 650°C.

10. The preparation method according to any one of claims 7 to 9, wherein the deposition of oxygen comprises one or more of the following features:
using an oxygen-containing gas as a gas source;
using an inert gas as a second carrier gas; and
performing deposition at a deposition temperature of 100°C to 400°C for 18 h to 36 h.

11. The preparation method according to any one of claims 7 to 10, wherein the deposition of carbon comprises one or more of the following features:
using a carbon-containing gas as a carbon source;
using an inert gas as a third carrier gas; and
performing deposition at a deposition temperature of 400°C to 500°C for 4 h to 10 h.

12. The preparation method according to any one of claims 7 to 11, wherein the porous carbon matrix is prepared by at least one of a carbonization method, an activation method, and a template method.

13. A secondary battery, comprising a negative electrode sheet, the negative electrode sheet comprising a negative electrode current collector and a negative electrode film layer located on at least one surface of the negative electrode current collector, wherein the negative electrode film layer comprises the negative electrode material according to any one of claims 1 to 6 or the negative electrode material prepared by the preparation method according to any one of claims 7 to 12.

14. The secondary battery according to claim 13, wherein the negative electrode material further comprises lithium silicate.

15. An electric device, comprising the secondary battery according to claim 13 or 14.
